# EUROPEAN PATENT APPLICATION

(11) **EP 3 914 009 A1**
(43) Date of publication of application: **24.11.2021**
(21) Application number: 20175492.6
(22) Date of filing: 19.05.2020
(51) Int. Cl.: H04W 72/04

(54) **BUFFER STATUS REPORT ENHANCEMENT**

(71) Applicant: Panasonic Intellectual Property Corporation of America, Torrance, CA 90503 (US)
(72) Inventor: SHAH, Rikin, 63225 Langen (DE); SUZUKI, Hidetoshi, Osaka-shi, Osaka 540-6207 (JP); TAO, Ming-Hung, 63225 Langen (DE); NISHIO, Akihiko, Osaka-shi, Osaka 540-6207 (JP)
(74) Representative: Grünecker Patent- und Rechtsanwälte PartG mbB

(57) **Abstract**

The present disclosure relates for method and apparatuses (devices) for transmission and/or reception of data over a communication network. In particular, an uplink control information is transmitted and/or received, wherein the uplink control information indicates data available for transmission at the communication device which is a user equipment, UE, and that said data available for transmission include both data for which acknowledgements are enabled and data for which acknowledgements are disabled.

## Description

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates efficient resource allocation for uplink, and in particular, an efficient signaling of the amount of data available for transmission.

In an embodiment, the techniques disclosed herein feature a communication device, comprising: circuitry, which, in operation, generates uplink control information indicating data available for transmission at the communication device which is a user equipment, UE, as well as indicating that said data available for transmission include both data for which acknowledgements are enabled and data for which acknowledgements are disabled; and a transceiver, which, in operation, transmits the generated uplink control information.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: illustrates a scenario of a non-terrestrial network (NTN), wherein a transmission between a terminal is performed via a remote radio unit including a satellite and an NTN gateway;
- **Fig. 7**: illustrates a scenario of a non-terrestrial network, wherein a transmission between a terminal is performed via a satellite including a gNB as a scheduling device;
- **Fig. 8**: shows exemplary short buffer status report format;
- **Fig. 9**: shows exemplary long buffer status report format;
- **Fig. 10**: illustrates an example of a logical channel group including logical channels with mutually different acknowledgement settings;
- **Fig. 11**: is a block diagram illustrating exemplary base station and user equipment capable of communicated over a channel;
- **Fig. 12**: illustrates an exemplary buffer status report (BSR) signaling a share of data in the buffer with a certain acknowledgement transmission setting;
- **Fig. 13**: illustrates an exemplary buffer status report (BSR) signaling a share of data in the buffer with a certain acknowledgement transmission setting and a priority;
- **Fig. 14**: illustrates an exemplary BSR signaling the amount of data with enabled acknowledgements and data with disabled acknowledgements;
- **Fig. 15**: is a flow diagram illustrating methods for transmitting and receiving the uplink control information at the UE and the basis station, respectively;
- **Fig. 16**: is a flow diagram illustrating operation on a UE side; and
- **Fig. 17**: is a flow diagram illustrating operation on a network side.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

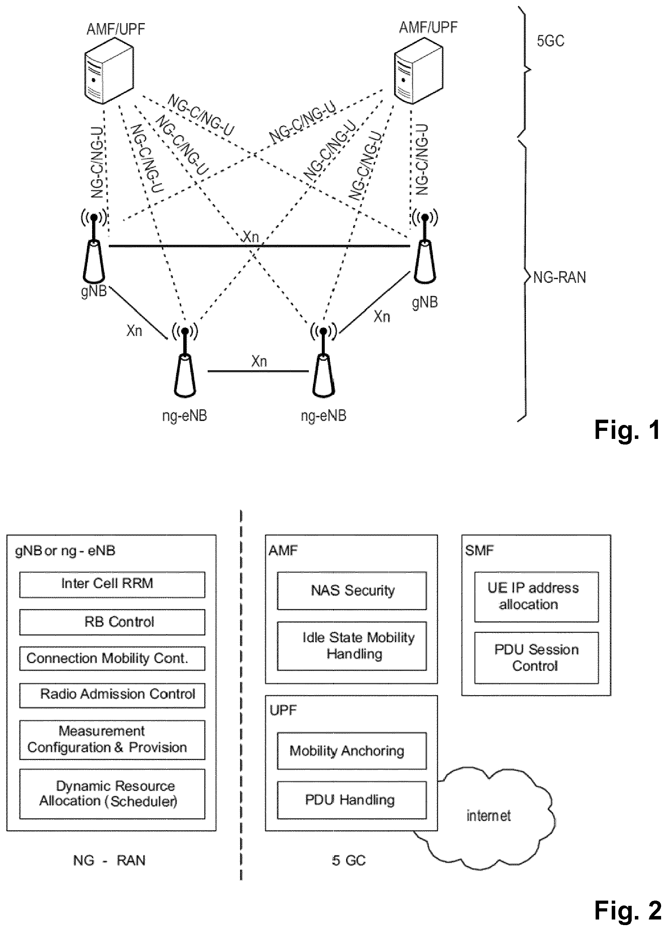

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### 5G NR functional split between NG-RAN and 5GC

**Fig. 2** illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

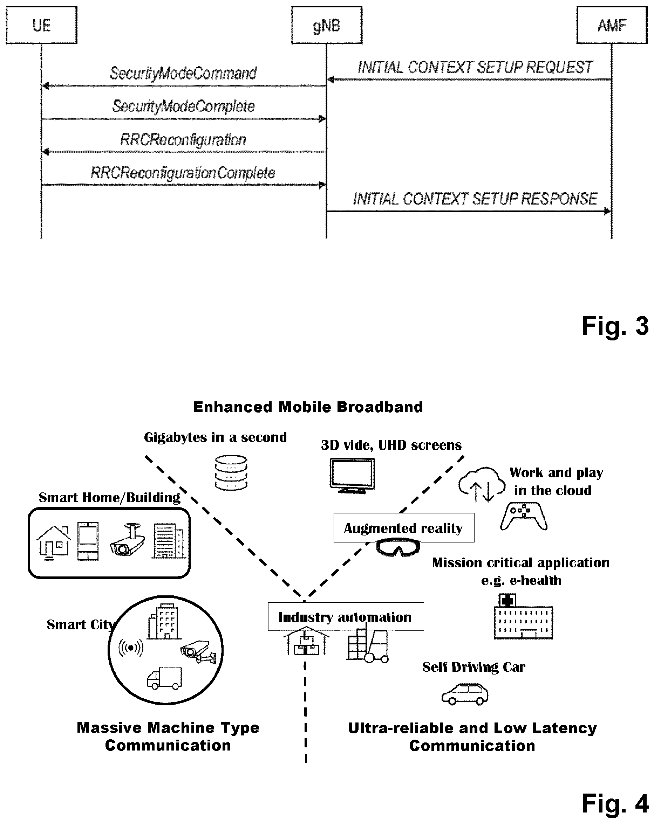

**Fig. 3** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

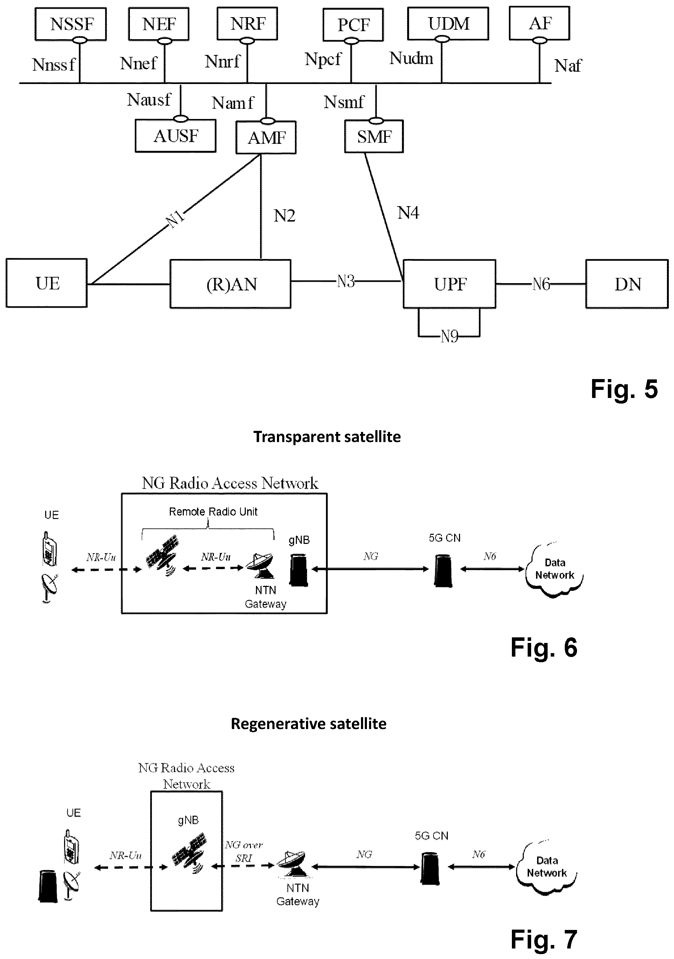

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

A terminal is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node or scheduling node, e.g. forming a part of the network for providing services to terminals. A base station is a network node, which provides wireless access to terminals.

### RRC states

In wireless communication systems including NR, a device or communication apparatus (e.g. UE) can be in different states depending on traffic activity. In NR, a device can be in one of three RRC states, RRC_IDLE, RRC_CONNECTED, and RRC_INACTIVE. The first two RRC states, RRC_IDLE and RRC_CONNECTED, are similar to the counterparts in LTE, while RRC_INACTIVE is a new state introduced in NR and not present in the original LTE design. There are also core network states, CN_IDLE and CN_CONNECTED, depending on whether the device has established a connection with the core network or not.

In RRC_IDLE, there is no RRC context - that is, the parameters necessary for communication between the device and the network - in the radio-access network and the device does not belong to a specific cell. From a core network perspective, the device is in the CN_IDLE state. No data transfer may take place as the device sleeps most of the time to reduce battery consumption. In the downlink, devices in idle state periodically wake up to receive paging messages, if any, from the network. Mobility is handled by the device through cell reselection. Uplink synchronization is not maintained and hence the only uplink transmission activity that may take place is random access, e.g. to move to a connected state. As part of moving to a connected state, the RRC context is established in both the device and the network.

In RRC_CONNECTED, the RRC context is established and all parameters necessary for communication between the device and the radio-access network are known to both entities. From a core network perspective, the device is in the CN_CONNECTED state. The cell to which the device belongs is known and an identity of the device, the Cell Radio-Network Temporary Identifier (C-RNTI), used for signaling purposes between the device and the network, has been configured. The connected state is intended for data transfer to/from the device, but discontinuous reception (DRX) can be configured to reduce device power consumption. Since there is an RRC context established in the gNB in the connected state, leaving DRX and starting to receive/transmit data is relatively fast as no connection setup with its associated signaling is needed. Mobility is managed by the radio-access network, that is, the device provides neighboring-cell measurements to the network which commands the device to perform a handover when relevant. Uplink time alignment may or may not exist but need to be established using random access and maintained for data transmission to take place.

In LTE, only idle and connected states are supported. A common case in practice is to use the idle state as the primary sleep state to reduce the device power consumption. However, as frequent transmission of small packets is common for many smartphone applications, the result is a significant amount of idle-to-active transitions in the core network. These transitions come at a cost in terms of signaling load and associated delays. Therefore, to reduce the signaling load and in general reduce the latency, a third state is defined in NR, the RRC_INACTIVE state.

In RRC_INACTIVE, the RRC context is kept in both the device and the gNB. The core network connection is also kept, that is, the device is in CN_CONNECTED from a core network perspective. Hence, transition to connected state for data transfer is fast. No core network signaling is needed. The RRC context is already in place in the network and idle-to-active transitions can be handled in the radio-access network. At the same time, the device is allowed to sleep in a similar way as in the idle state and mobility is handled through cell reselection, that is, without involvement of the network. Accordingly, the mobility of the communication apparatus or device is device controlled rather than network controlled, and the communication apparatus is capable of contacting the network through random access. Thus, RRC_INACTIVE can be seen as a mix of the idle and connected states (for further details, see E. Dahlman, et al., 5GNR: The Next Generation Wireless Access Technology, 1st Edition, sections 6.5.1 to 6.5.3).

### Non-terrestrial networks (NTNs)

In 3GPP, NR-based operation in a non-terrestrial network (NTN) is studied and described (see e.g. 3GPP TR 38.811, Study on New Radio (NR) to support non-terrestrial networks, version 15.2.0, and 3GPP TR 38.821, Solutions for NR to support non-terrestrial networks, version 16.0.0).

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite.

In NTN, there may be different kinds of platforms , including satellites and UAS (Unmanned Aerial System) platforms, examples of which are listed in Table 1 (corresponding Table 4.1-1 of 3GPP TR 38.821, see also 3GPP TR 38.821, Section 4.1, Non-Terrestrial Networks overview):

**Table 1: Types of NTN platforms**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including High Altitude Platform Station (HAPS)) | 8 - 50 km (20 km for HAPS) | | 5 - 200 km |
| High Elliptical Orbit (HEO) satellite | 400 - 50000 km | Elliptical around the earth | 200 - 3500 km |

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

### Uplink resource scheduling

In order to support scheduling of uplink, the UE reports to the gNB that there are data to be transmitted from the UE and the amount of that data. This reporting is performed by transmitting to the gNB a buffer status report (BSR). The BSR is reported in uplink to inform the network about the amount of buffered data at the UE. The data which is buffered at the UE may be data with different characteristics and/or requirements on quality of service (QoS). In other words, the buffered data may belong to one or more logical channels. A logical channel is identified by a logical channel identifier (ID). Then, the data are assigned to a particular logical channel. Moreover, a logical channel may be associated with a logical channel priority. The logical channel priority is an identifier, which enables to distinguish the data according to their QoS requirements. One or more logical channels may form a logical channel group (LCG). A logical channel group is identified by an LCG identifier. The BSR reporting is performed per LCG by using short or long BSR format. For the purpose of the present disclosure, the logical channel ID and/or the LCG ID may be any kind of ID such as a number or a symbol.

In NR, the BSR is a kind of MAC control element (CE) conveyed from the UE to the network (e.g. gNB), carrying the information on how much data is in UE buffer to be sent out. After receiving the BSR, the network would allocate the corresponding amount of resources with an uplink grant, if the resources are available. With this mechanism, network can optimize uplink resources (PUSCH resources). Namely, it is possible to allocate uplink resources only when UE has something to transmit and to avoid allocating too much resources (i.e. more than what UE needs to transmit the data in the buffer) which would lead to waste of resources. How scheduling works, and further details on buffer status report can be taken from 3GPP TS 38.321 V15.8.0 (2019-12) sections 5.4.5, 6.1.3 and 6.2.1.

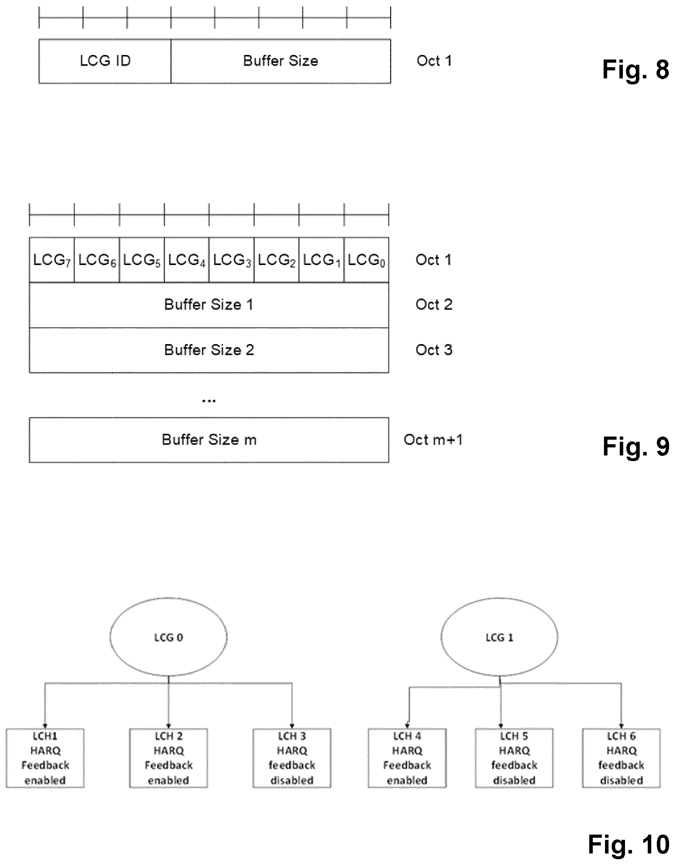

An exemplary short BSR format is illustrated in Fig. 8. The short BSR has a length of one octet (Oct 1), meaning 8 bits, i.e. one byte. This exemplary short BSR consists of two fields, a first field indicating an LCG group (in particular, a LCG identifier, LCG ID) and a second field indicating the buffer size, i.e. the amount of data of the LCG group (defined by the LCG ID) indicated in the first field. Here, the first field has a length of 3 bits, whereas the second field has a length of 5 bits.

An exemplary long BSR format is illustrated in Fig. 9. The long BSR is capable of indicating buffer length for up to eight LCGs. For this purpose, eight bits of one octet (Oct 1) are associated with respective eight LCGs, namely LCG₀ to LCG₇. Each of these eight bits indicates whether or not a buffer length is further specified in the same long BSR for the LCG associated with said bit. The first octet (Oct 1) is followed by m further octets 1 to m. Parameter m corresponds to the number of LCGs for which a buffer length is specified in the same long BSR. Each of the octets 1 to m specifies buffer length for one respective LCG. The ordering of octets 1 to m within the BSR is predefined, e.g. in the same order as the fields (here bits) of the first octet (Oct 1).

It is noted that in general, the present disclosure is not limited to such short and long BSR. Rather, a short BSR has a lower length than the long BSR. However, the short BSR does not have to be limited to a single octet. A single octet length provides the advantage of a very efficient and compact signalling. Nevertheless, for providing more information to the scheduling node (base station, gNB), a longer short BSR could be employed. Moreover, the above mentioned formats for the short BSR and for the long BSR, in terms of fields and their length, may be different. In general, it is conceivable that LCG is not signalled at all and the buffer status is indicated for all logical channels of the terminal.

In NR, the RRC protocol configures (semi-statically) a mapping between a logical channel (LCH) and the LCG ID. The Logical Channel Group ID field identifies the group of logical channel(s) whose buffer status is being reported. The Buffer Size field identifies the total amount of data available. A standard defines the mapping between the possible values of the buffer size field and the actual size in bytes. An example based on standard specification 3GPP TS 38.321, V.F.8.0, Table 6.1.3.1-1 shows a table with Buffer size levels (in bytes) for a 5-bit Buffer Size field. Moreover, Table 6.1.3.1-2 in the same standard specification shows Buffer size levels (in bytes) for 8-bit Buffer Size field. Table 6.1.3.1-1 is copied below:

**Table 6.1.3.1 -1: Buffer size levels (in bytes) for 5-bit Buffer Size field**

| **Index** | **BS value** | **Index** | **BS value** | **Index** | **BS value** | **Index** | **BS value** |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

As can be seen in the table, it associates indexes 0 to 31 with the respective buffer sizes.

The short BSR Format is used to report uplink buffer only for one logical channel group, whereas the long BSR format is used to report uplink buffer for all logical channel groups.

As mentioned above, the NTN link may have a longer round trip time, which makes application of the HARQ (Hybrid Automatic Repeat Request) on physical layer (or in any other layer) less effective. Therefore, it may be advantageous to enable that the network is capable of enabling and disabling the HARQ feedback. The enabling or disabling of the uplink HARQ feedback can be configurable on a per UE, per HARQ process and/or per LCH. Uplink HARQ feedback here refers to positive and/or negative acknowledgements transmitted in downlink for the data conveyed in uplink, for which the buffer status is reported. The present disclosure is not limited to buffer status reporting in the MAC CE. Rather, the UCI of the present disclosure may be reported within any other signaling, e.g. another MAC element or on physical layer or the like.

When increasing the UL data transmission delay, the UL grant especially for MsgA and Msg3 could be very limited in terms of amount of data granted, which may allow UE to send only a short BSR. MsgA and Msg3 are types of messages used in NR for the purpose of random access. random access procedure is triggered by various events, such as initial access from RRC_IDLE; RRC Connection Re-establishment procedure; DL or UL data arrival during RRC_CONNECTED when UL synchronisation status is "non-synchronised"; UL data arrival during RRC_CONNECTED when there are no PUCCH resources for SR available; SR failure; request by RRC upon synchronous reconfiguration (e.g. handover); transition from RRC_INACTIVE; to establish time alignment for a secondary TAG; request for Other SI, or beam failure recovery.

In particular, Msg3 is sent in a four-step RACH procedure. The four-step RACH procedure includes transmitting of a preamble from a UE to the gNB with Msg1 message (of the MAC protocol), gNB sending a response to the random access with Msg2, UE transmitting an RRC connection request with Msg3 and gNB sending connection response with Msg4. On the other hand, MsgA is sent in a two-step random access channel (RACH) procedure. The two-step RACH procedure is a simplification of the four-step RACH procedure in which MsgA carries both Msg1 and Msg3 referred to above, while MsgB carries both Msg2 and Msg4 mentioned above. According to 3GPP TS 36.321, V16.0.0 (2020-03), when an uplink transmission is required, e.g., for contention resolution, the eNB should not provide a grant smaller than 56 bits (or 88 bits for NB-IoT) in the Random Access Response. Typically, to provide for resource handling efficiency, the network would provide a minimum size of UL grant in MsgA (2 step RACH) and Msg 3 (4 step RACH) which is 56 bit or 88 bits. An UL grant for transmitting MsgA and Msg3 could be very limited, which may allow UE to send only a short BSR. In order for network to know the complete buffer status of the UE, it requires then an additional step for UE to send a long BSR. This additional step would cause longer delay (for NTN it could be up to 544ms) for the uplink data transmission.

For example, the UE may fill the granted resources based on the following priority order as mentioned in the 3GPP TS 38.321, Section 5.4.3.1.3. Logical channels are prioritized in accordance with the following order (highest priority listed first): C-RNTI MAC CE or data from UL-CCCH; Configured Grant Confirmation MAC CE; MAC CE for BSR, with exception of BSR included for padding; Single Entry PHR MAC CE or Multiple Entry PHR MAC CE; data from any Logical Channel, except data from UL-CCCH; MAC CE for Recommended bit rate query; and MAC CE for BSR included for padding. Thus, if UL grant is obtained for transmitting the MsgA and Msg3 (corresponding to MAC CE for BSR above), if the there is any space remaining, then UE includes MAC CE and user data (data from any logical channel).

Without knowing for which kind of LCH (ACK enabled, ACK disabled, mixed), the network would not provide grant which fits the LCH's HARQ configuration. In particular, when the network receives a BSR request, it could not determine whether the BSR is triggered due to LCH that have enabled the HARQ feedback or disabled the HARQ feedback or both. As a result, network would not know whether to allocate UL resource corresponds to HARQ feedback enabled or HARQ feedback disabled or both.

Fig. 10 illustrates the BSR reporting which is performed per LCG (Logical channel group). Mapping between the LCHs (logical channel) and LCG (Logical channel group) is configured by the network and known to both the network and the user communication device (UE). For example, in Figure 10, there are two LCGs shown, an LCG0 and an LCG1. LCG0 includes three LCHs, namely LCH1, LCH2, and LCH3, among which LCH1 and LCH2 has acknowledgements enabled and LCH3 has acknowledgements disabled. Thus, the LCG0 has data with both acknowledgements enabled and acknowledgements disabled. Moreover, LCG1 has three LCHs configured, namely LCH4, LCH5, and LCH6, among which LCH4 has acknowledgements enabled whereas LCH5 and LCH6 have acknowledgements disabled. Thus, the LCG1 has also data with both acknowledgements enabled and acknowledgements disabled. It is noted that it is possible to define an LCG with LCHs which all have acknowledgements enabled (such as another LCGx with LCH1, LCH2, and LCH4). Moreover, it is also possible to define an LCG with LCHs which all have acknowledgements disabled (such as another LCGy with LCH3, LCH5, and LCH6). In the scenario of Fig. 10, when the network receives a BSR for LCGO, it does not differentiate whether the BSR has been triggered due to LCH1/LCH2 or LCH3. Similarly, when the network receives a BSR for LCG1, it does not differentiate whether the BSR has been triggered due to LCH4 or LCH5/LCH6.

In order to enable the network to more efficiently assign uplink resources, according to some embodiments of the present disclosure, the UE is capable of generating and sending to the network an uplink control information carrying the information regarding the total amount of available data (i.e. BSR) that is associated with HARQ feedback enabled and HARQ feedback disabled. On the other hand, the network is also capable of receiving the information regarding the total amount of available data (i.e. BSR) that is associated with HARQ feedback enabled and HARQ feedback disabled. Moreover, the network is capable of performing the scheduling in accordance with the received information by taking into account the amount of data with HARQ enabled and the amount of data with HARQ disabled. The network then issued a grant or a plurality of grants accordingly.

This approach provides some advantages: Based on the information which enables to the network to distinguish the amount of data with HARQ enabled and the amount of data with HARQ disabled, the network provides the corresponding UL grant for the traffic that needs to be scheduled. Moreover, the UL data transmission delay can be reduced since only one BSR transmission is required for the mixed data with HARQ enabled and HARQ disabled.

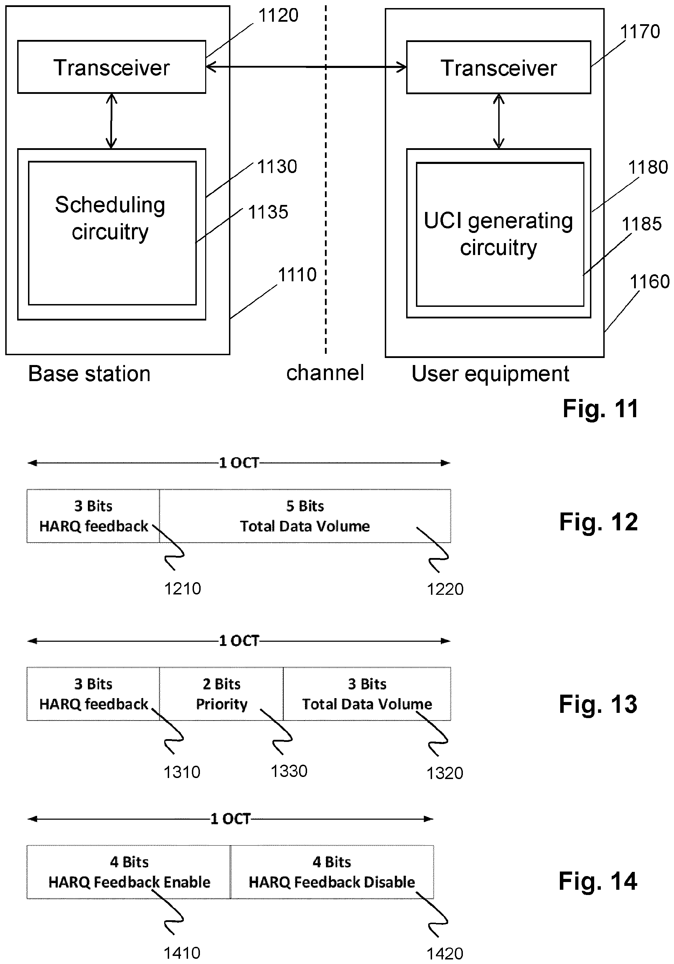

Fig. 11 illustrates a communication device 1160. The communication device 1160 comprises circuitry 1180, which, in operation, generates uplink control information (UCI) indicating: (i) data available for transmission at the communication device which is a user equipment, UE, and (ii) that said data available for transmission include both data for which acknowledgements are enabled and data for which acknowledgements are disabled. As can be seen in Fig. 11, the circuitry 1180 may include UCI generating circuitry 1185 for this purpose. The communication device 1160 further includes a transceiver 1170, which, in operation, transmits the generated uplink control information. The transmission may take place over a channel, illustrated by a dashed vertical line in Fig. 11. In this way, it is possible for a network to receive the UCI and to determine therefrom whether or not said data available for transmission include both data for which acknowledgements are enabled and data for which acknowledgements are disabled.
Fig. 11 also illustrates a communication device 1110. The communication device 1110 comprises a transceiver 1120, which, in operation, receives uplink control information (UCI). The UCI indicates (i) data available for transmission at a user equipment, UE, and (ii) that (e.g. whether or not) said data available for transmission include both data for which acknowledgements are enabled and data forwhich acknowledgements are disabled. Moreover, the communication device 1110 further comprises circuitry 1130, which, in operation, provides at least one grant for said data available for transmission at the UE according to the uplink control information. This may be performed by a specific part of the circuitry, namely the scheduling circuitry 1135. The transceiver 1120, in operation, then transmits the at least one provided grant. It is noted that when referring herein to a module (unit) that performs an action in operation, it corresponds to saying that the module (unit) is configured to perform the action.

The uplink control information in the present disclosure is not limited to any particular format. In the following, several exemplary embodiments are described, which show possible formats of the UCI. In a first exemplary example, uplink control information specifies a share of the data for which acknowledgements are enabled and/or the data for which acknowledgements are disabled in the data available for transmission; and a total amount of the data available for transmission.

Fig. 12 shows an example of a possible UCI format. The UCI in this example corresponds to a short BSR with a size of one octet. A first filed (three bits in this example) 1210 indicates the share of the data for which acknowledgements are enabled and the data for which acknowledgements are disabled in the data available for transmission. A second field 1220 indicates the total size of the buffer, which may include the data for which acknowledgements are enabled, the data for which acknowledgements are disabled, as well as mixed data, which include data with acknowledgements enabled as well as disabled. In this example, the second field 1220 has the size of 5 bits.

For example, let assume that there are logical channels LCH₁, LCH₂, LCH₃, LCH₄, LCH₅, and LCH₆ has each 1000 bits of data. Hence, a UE has a total amount of data 6000 bits in all the logical channels of a logical channel group. If the UE includes the share (e.g. percentage) along with the total data amount (e.g. 50% HARQ feedback enabled, 50% HARQ feedback disabled), the network can assign uplink resources accordingly. In this example, Network can assign 3000 bits grant for HARQ feedback enable data and 3000 bits grant for HARQ feedback disable data to UE.

If UE does not include any indication of share (e.g. in the form of a percentage) into its signaling to a network, the network does not differentiate amount of data that have HARQ feedback enabled and data that have HARQ feedback disabled. Therefore, in order to differentiate the amount of data with HARQ feedback enabled and data with HARQ feedback disabled, information regarding share (percentage) may help the network to assign uplink resources efficiently.

The BSR format shown in Figure 12 contains the 8 bits with the first 3 bits carrying the information regarding HARQ configuration and the remaining 5 bits carrying total amount of data. This BSR format may be further defined by specifying the meaning of the respective first and second fields. For instance, the following table 1 illustrates an example of the 8 values which may be signaled by the three bits with the assigned meaning (semantic).

**Table 1: Exemplary assignment of the three bits of the first field to signaling the share of data with (without) acknowledgements.**

| **3 Bits** | **HARQ Feedback** |
|---|---|
| **000** | Enable |
| **001** | 90% enable |
| **010** | 70% enable |
| **011** | 50% enable |
| **100** | 30% enable |
| **101** | 20% enable |
| **110** | 10% enable |
| **111** | Disable |

In particular, one value (here "000") indicates that all data of the total data amount signaled in the second field has acknowledgements enabled. In other words, after the data is transmitted in the uplink from the UE to the base station (or, in general, to the network), the base station (network) sends positive or negative acknowledgement indicating whether or not the data were received and decoded successfully. Moreover, another value (here "111") indicates that all data of the total data amount signaled in the second field has acknowledgements disabled. The remaining values indicate different percentages of data with enabled (and thus implicitly also data with disabled) acknowledgements. For example, value "110" indicates that around 10% of data has acknowledgements enabled, while the remaining data has the acknowledgements disabled. The value "001" indicates that around 90% of data has the acknowledgements enabled and the remaining data has the acknowledgements disabled. The term "around" may indicate that for the value "110" for instance that more than zero but less than 20% are data with enabled HARQ. This example results in overlapping intervals centered at the percentage value defined by the table. In general, this is a matter of convention and the semantics (interpretation) should be known to the encoder and the decoder. For example, the value "110" may be specified to indicate that between zero and 15% are data with HARQ enabled. Similarly, "101" may indicate that between 15% and 25% are data have HARQ enabled, resulting in non-overlapping intervals centered at the percentage value defined by the table. Further alternatives are possible. For instance, the first field may define a range. For example, the value "110" may be considered to specify that the share of data with enabled HARQ is up to 10%, whereas "101" may indicate that the share of data with enabled HARQ is between 10% and 20%, etc. This approach assumes that the values that can be taken by the first field indicate the range of percentage into which the percentage is supposed to fall.

Correspondingly, at a UE side, when the value of the share of data with enabled HARQ falls between a lower bound (of second column in Table 1, meaning larger share of such data) and an upper bound, UE may select:
- Option 1: the lower bound value, resulting in signaling the share higher than it really is.
- Option 2: the upper bound value, resulting in signaling the share lower than it really is.
- Option 3: the value which is closer to the actual share determined at the UE.

Option 1 is beneficial from UE perspective, since gNB allocates a sufficient grant for HARQ disable traffic which is usually time sensitive or critical.

For example, if a UE has 80% data that has enabled the HARQ feedback, UE will select "010" (in case of Option 1) and "001" (in case of Option 2). For example, the UE has total amount of data X4 where 20% data belongs to HARQ feedback enable (i.e. 80% data belongs to HARQ feedback disable) UE includes 101000011 (see Table 2 below for X4).

The following Table 2 shows an exemplary association between the 32 values which can be indicated by the 5 bits of the second field and the total data volume amounts X1, X2, ..., X32. The total data volume amounts may correspond to those of Table 6.1.3.1-1 shown above, or be designed differently.

The total data volume amounts here can represent, for instance, the lower bound or the upper bound of an interval.

**Table 2: Exemplary assignment of the five bits of the second field to signaling the total size of data.**

| **5 Bits** | **Total Data Volume** |
|---|---|
| **0** | X1 |
| **1** | X2 |
| **2** | X3 |
| **3** | X4 |
| **4** | X5 |
| . | . |
| **.** | . |
| **31** | X32 |

At the terminal (UE, such as the above communication device 1160) side, when the amount of data to be transmitted falls between a lower bound Xi and an upper bound X(i+1), the terminal can select:
- Option 1: the lower bound value Xi.
- Option 2: the upper bound value X(i+1).
- Option 3: whichever among the lower bound value Xi and the upper bound X(i+1) is closer to the amount of data to be transmitted.

Option 1 may be beneficial in some scenarios, as it results in assigning sufficient resources for data with disabled HARQ. It is noted that the behavior of the UE may be standardized to take one of the three options, or may be implementation specific.

For example, X1 may indicate that the total number of data is between 0 and X1 (e.g. not including X1), X2 may indicate that the total number of data is between X1 and X2 (e.g. not including X2), etc. and X32 may indicate that the total number of data is between X31 and the maximum assignable value for the total amount (volume) of data which may be indicated in the BSR report. As mentioned above, the semantics may be defined in a different way, such as the X-value (in the second column of Table 2) defining a center of overlapping or non-overlapping intervals. Then the UE has no ambiguity in interpretation and merely compares the actual data amount with the defined intervals and selects the interval to which the actual amount falls. It is noted that the symbols Xi (i.e. X1, X2, ... ) stand for some amounts such as those defined in the above-mentioned Table 6.1.3.1-1 from the NR MAC specification 3GPPTS 38.321, or any other amounts known to both the UE and the gNB.

According to an exemplary implementation, the uplink control information further includes a first priority of the data for which acknowledgements are enabled and/or a second priority of the data for which acknowledgements are disabled in the data available for transmission, wherein the first priority is different from the second priority. Provision of priorities may facilitate a more efficient QoS control.

Fig. 13 illustrates the corresponding short BSR format. In particular, the short BSR in this example has 8 bits and three fields: a first field 1310 for indicating the HARQ feedback enabling/disabling, a second field 1320 for indicating the total amount of data, and a third field 1330 for indicating a priority. In particular, in this example, the UE includes a priority indication together with the data volume and the HARQ feedback configuration in the BSR format. The BSR format may include the first field having 3 bits with semantics as discussed above with reference to Table 1. The BSR format may further include 3 bits (instead of 5 bits from the example described with reference to Fig. 12) for indicating the amount of data.

In addition, 2 bits of the third field 1330 can be used to indicate priority of the total data of which amount is indicated in the second field 1320. The priority information helps the network to prioritize dynamic grant to fulfil QoS (Quality of Service). For example, the network may provide the UL grant faster for higher priority data.

Table 3 provides an exemplary implementation of a table defining semantics of the third field of the exemplary size of two bits.

**Table 3: Exemplary association between the 2-bit values of the third field and their meaning (semantic) within the UCI.**

| **2 bits** | **Priority** | **Network Response** |
|---|---|---|
| **00** | Low priority for HARQ feedback enable and/or disable | Network will consider lower priority data hence it will not provide dynamic grant faster (than for other kinds of data) |
| **01** | Low priority for HARQ feedback enable | Network will schedule faster dynamic grant for HARQ feedback disabled data than for HARQ feedback enabled data |
| | High priority for HARQ feedback disable | |
| **10** | High priority for HARQ feedback enable | Network will schedule faster a dynamic grant for HARQ feedback enabled data than for HARQ feedback disabled data |
| | Low priority for HARQ feedback disable | |
| **11** | High priority for HARQ feedback enable and/or disable | Network will consider data as higher priority data and hence it will provide dynamic grant faster (than for low priority data) |

For example, if a first terminal UE1 has a total amount of data with priority indication "00" and a second terminal UE2 has a total amount of data with priority indication "11", the network will provide faster dynamic grant to UE2. This is because the indication "00" specifies that the total amount of data available for transmission at UE1 have the low priority, irrespectively of whether the acknowledgements are enabled or disabled. On the other hand, the indication "11" specifies that the total amount of data available for transmission at UE2 have the high priority, irrespectively of whether the acknowledgements are enabled or disabled. By referring to the network, here, any network infrastructure device responsible for resource allocation / scheduling is meant. In the exemplary embodiments herein, this refers to a base station (such as gNB). However, in general, another entity may be responsible for these tasks.

When referring to a faster grant or a faster scheduling, what is meant that high priority data are handled faster than the low priority data on the network side (at the base station). Correspondingly, the terminal may (statistically) receive grants faster for the data with high priority than for the data with low priority.

In general, as exemplified by Table 3, the terminals and the network may distinguish at least two of the following cases (total data is the data available for transmission, amount of which is also indicated in the same BSR as the priority):
i) High priority for the total data irrespectively of the acknowledgement enablement or disablement.
ii) Low priority for the total data irrespectively of the acknowledgement enablement or disablement.
iii) High priority for the part of the total data with acknowledgements enabled and low priority for the part of the total data with acknowledgements disabled.
iv) High priority for the part of the total data with acknowledgements disabled and low priority for the part of the total data with acknowledgements enabled.

The present disclosure is not limited to the example shown in Table 3. Rather, there may be less priority levels (e.g. only levels 0 and 1, indicating two of the above mentioned possibilities) or more priority levels, indicating a distinction between the priorities finer than merely high and low. Moreover, joint signaling of the priority and the acknowledgement enabling / disabling may be applied. For example, the above-mentioned options ii) and iii) are only meaningful, if the total data has both acknowledgements enabled and acknowledgements disabled. Thus, combination of ii) and iii) with acknowledgement enabled for all total data (indicated in the BSR) does not need to be signalable. The same applies for acknowledgement enabled for all total data indicated in the BSR. Thus, one bit may be saved as compared to the separate signaling. The one bit may be used for a different purpose, such as indicating the amount of data available for transmission (buffer status). As is clear to those skilled in the art, further modifications in terms of signaling are possible.

Fig. 14 shows another example of a short BSR format, or, in general, another example of uplink control information content. In this example, the uplink control information indicates: a first amount of the data 1410 for which acknowledgements are enabled, and a second amount of the data 1420 for which acknowledgements are disabled.

In Fig. 14, the first 4 bits (a first field) contain information regarding the amount of data that has enabled HARQ feedback. The remaining 4 bits (a second field) of the short BSR with the length of one octet contain information regarding the amount of data that has disabled HARQ feedback.

The association between the value signaled with the 4 bits and the total data volume with (n case of the first field) and without (in case of the second field) acknowledgements enabled is shown in the exemplary Table 4. In other words, Table 4 shows, how an amount of data can be signaled by using 16 possible values which can be indicated by a 4-bit field.

**Table 4: An exemplary association between a value indicated by the 4 bits (in the 1410 or 1420 field) and the corresponding data amount.**

| **4 Bit** | **Total Data Volume** |
|---|---|
| **0** | No data (X1) |
| **1** | X2 |
| **2** | X3 |
| **3** | X4 |
| **...** | ... |
| **...** | ... |
| **...** | ... |
| **15** | X16 |

In this specific example, value "0000" (i.e. 0 in the first column of Table 4) indicates a zero amount of data. Thus, e.g., when zero is signaled for the field 1410, it means that there are only data with acknowledgements disabled. Similarly, when zero is signaled for the field 1420, it means that there are only data with acknowledgements enabled. The value of zero was not necessary in Table 2 above. This is because as soon as the uplink control information is transmitted, there is some data available for transmission in these exemplary embodiments. However, a zero value may also be included in Table 2 for some applications. The selection / meaning of the values X1 to X16 may be performed as described above with reference to Table 2. The values of X1 to X16 may differ from the values of Table 2, or may correspond to every second value, or the like.

It is noted that the example of Fig. 14 may be further modified by providing an additional field indicating the priority as described above with reference to Fig. 13. In particular, a one bit long or a two bit long priority field may be provides within the short BSR at the beginning, between the two fields 1410 and 1420, or at the end of the octet. Correspondingly, the length of at least one of the fields 1410 and 1420 may be shortened by one bit. For example, in order to apply example of Table 3, two bits of the octet would indicate the priority, three bits would indicate the first amount of data with HARQ enabled and the remaining three bits would indicate the second amount of data with HARQ disabled. It is noted that the terms "acknowledgements enabled" and "HARQ enabled" are here used interchangeably. In particular, for the present disclosure, it is immaterial, whether the automatic repeat request is actually hybrid. On the other hand, the embodiments described therein are readily applicable for the communication systems such as NR, in which the physical layer ARQ is a HARQ.

According to another exemplary implementation, the uplink control information includes an uplink control information index. The uplink control information index is associated with a combination of an amount of the data available for transmission and an acknowledgement enablement status. Moreover, the acknowledgement enablement status is capable of indicating at least one of:
- whether acknowledgements are enabled or disabled for the data available for transmission; and
- whether or not said data available for transmission include both data for which acknowledgements are enabled and data for which acknowledgements are disabled.

An example of the UCI index which can take seven values 0 to 7 and its meaning is shown in Table 5. Meaning here refers to a particular combination of the total data volume and the configuration on whether the acknowledgements are enabled and/or disabled. Table 5 also include in the last column, how network may utilize the information conveyed by the index when performing scheduling / resource allocation.

**Table 5: Uplink control information indicated jointly by means of an index.**

| **UCI Index** | **Total Data Volume** | **HARQ configuration** | **Network Response** |
|---|---|---|---|
| **0** | X1 | Enabled | Provides UL grant that has HARQ feedback enable |
| **1** | X2 | | |
| **2** | X3 | | |
| **3** | X1 | Disabled | Provides UL grant that has HARQ feedback disable |
| **4** | X2 | | |
| **5** | X3 | | |
| **6** | X1 | Enabled/Disabled | Provides two UL grant corresponding to HARQ feedback enable and HARQ feedback disable |
| **7** | X2 | | |

In other words, the UCI index value is associated with HARQ configuration along with total data volume. A UE selects an UCI index value corresponding to the total data volume available to the UE for transmission and corresponding to the HARQ feedback configuration. The HARQ feedback information is one of the:
(i) acknowledgements enabled for the total amount of data,
(ii) acknowledgements disabled for the total amount of data,
(iii) acknowledgements enabled for a part of the total amount of data and disabled for the remaining part of the total amount of data.

The second column indicates the amount of data for the respective HARQ configurations. For example, for the HARQ configuration (i), three possible values X1, X2, and X3 are distinguishable for the amount of data. For the HARQ configuration (ii), also three possible values X1, X2, and X3 are distinguishable for the amount of data in this example. However, it is noted that in general, in configuration (ii) the values X1, X2, X3 may differ from the values X1, X2, X3 in configuration (1) and/or (iii). In general, there may be a different number of possible values for configuration (i) and (ii). As can be seen in Table 5, in configuration (iii), there are two rather than three possible values X1 and X2 indicating the total amount of data. This is also only an example. In general, the configuration (iii) may enable for indicating more than two values and may also enable to indicate the share of the acknowledged data among the total data, as described above. Moreover, the values X1 and X2 for configuration (iii) may be different from values X1 and X2 for configuration (ii) and/or (i). For example, if a UE has a total data volume X1 that has HARQ feedback enabled, the UE selects UCI index 0. As a result, the network will schedule UL grant that has HARQ feedback enabled. Accordingly, the gNB can determine the corresponding UL grant by decoding UCI and taking it into account when generating the grant.

The UCI index may be carried with a scheduling request within a physical uplink control channel (PUCCH). The specification 3GPP TS 38.213, V15.8.0 (2019-12), section 9.2.2, shows PUCCH formats. The UCI index may be carried within an existing PUCCH format such as PUCCH format 4, which is capable of carrying three bits. However, providing a new PUCCH format may facilitate signaling more information to the gNB, such as more levels (values) for the amount of data and/or more values to indicate the share between the data with HARQ enabled and data with HARQ disabled among the indicated amount.

The UCI index table such as Table 5 illustrated above may be fixed in a specification, i.e. known to the UEs and gNBs and not configurable. In another example, the UCI index table may be configurable. The configuration may be performed, e.g. by a higher layer protocol such as the Radio Resource Control (RRC) protocol. This option is more flexible. The network can send such association for instance within system information message(s) or within dedicated RRC message(s). System information may be broadcasted by the cell regularly as a common information readable by any terminal in the cell.

As mentioned above, the UE may include the UCI index value into the Scheduling Request (SR) message on physical layer. However, Table 5 or, in general, a table jointly coding the amount of data and HARQ feedback configuration by means of an index to such combinations, may also be used with MAC signaling.

In the context of known networks, an embodiment may be employed in which the uplink control information is a buffer status report on Medium Access Control, MAC, layer, indicating amount of the data available for transmission at the UE. The buffer status is transmitted whenever a UE has data to be transmitted for which resource allocation is to be performed by the network (e.g. by a network entity such as a base station / access point or a base station controller or the like, depending on the network architecture). The buffer status itself may be sent within a scheduled resource or within a contention-based random access procedure.

Alternatively, or in addition, the uplink control information is the scheduling request on the physical layer (layer 1), as mentioned above.

The buffer status report (which may be carried by MAC layer as in some known networks, or may be carried in another layer) is a short buffer status report with a size of 8 bits that includes:
- 3 bits for signaling whether said data available for transmission include both data for which acknowledgements are enabled and data for which acknowledgements are disabled, and 5 bits for signaling the amount of the data available for transmission by the UE; or
- 3 bits for signaling whether said data available for transmission include both data for which acknowledgements are enabled and data for which acknowledgements are disabled; 3 bits for signaling the amount of the data available for transmission by the UE, and 2 bits for signaling the priority of the data available for transmission; or
- 4 bits for the amount of the data for which acknowledgements are enabled, and 4 bits for the amount of the data for which acknowledgements are disabled.

The term "short BSR" here refers to communication systems which support two kinds of BSR, namely the short BSR and a long BSR which is longer (in terms of number of bits) than the short BSR. They are typically used in different situations. For example, a short BSR is used on RACH (contention-based transmission) while long BSR is typically used when data communication is established or after the resources for the long BSR were granted by an exchanged using a short BSR. The above mentioned three exemplary options are not limiting for the present disclosure in terms of number of bits.

When employing the embodiments described herein in the context of NR networks, the data available for transmission may be data available for all logical channels of a logical channel group; and each logical channel of the logical channel group is configurable to carry any one of:
- data for which acknowledgements are enabled,
- data for which acknowledgements are disabled, and
- data for which acknowledgements are enabled and data for which acknowledgements are disabled.

No assumptions are made here regarding whether the HARQ feedback configuration can be set per logical channel, per HARQ process or otherwise.

With any of the above-described embodiments, the uplink control information may further include a traffic type indication capable of indicating at least one of enhanced Ultra Reliable and Low Latency Communications, eURLLC, and Enhanced Mobile Broadband, eMBB.

In particular, the UE may indicate, within the uplink control information (e.g. within the BSR), traffic type information (e.g. eURLLC vs eMBB). With such information, the network may be able to allocate different grants (e.g. lower MCS with a grant for eURLLC than with a grant for eMBB) according to the traffic type. The term different grants means that the grants may mutually differ in terms of the resources allocated such as in terms of modulation, MIMO, power or other settings.

The network (e.g. the gNB) configures the traffic type for instance while configuring a logical channel. An exemplary RRC protocol syntax (in ASN.1 format) is shown below. In particular, the logical channel configuration information element LogicalChannelConfig includes among uplink specific parameters ul-SpecificParameters a traffic type element traffic-type-differentiation which may be Boolean taking a first value (such as 0) for a first kind of traffic and taking a second value (such as 1) for a second king of traffic.

### LogicalChannelConfig information element

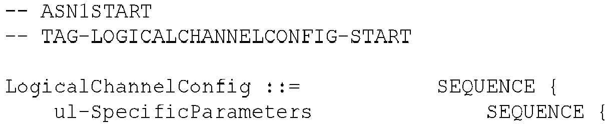

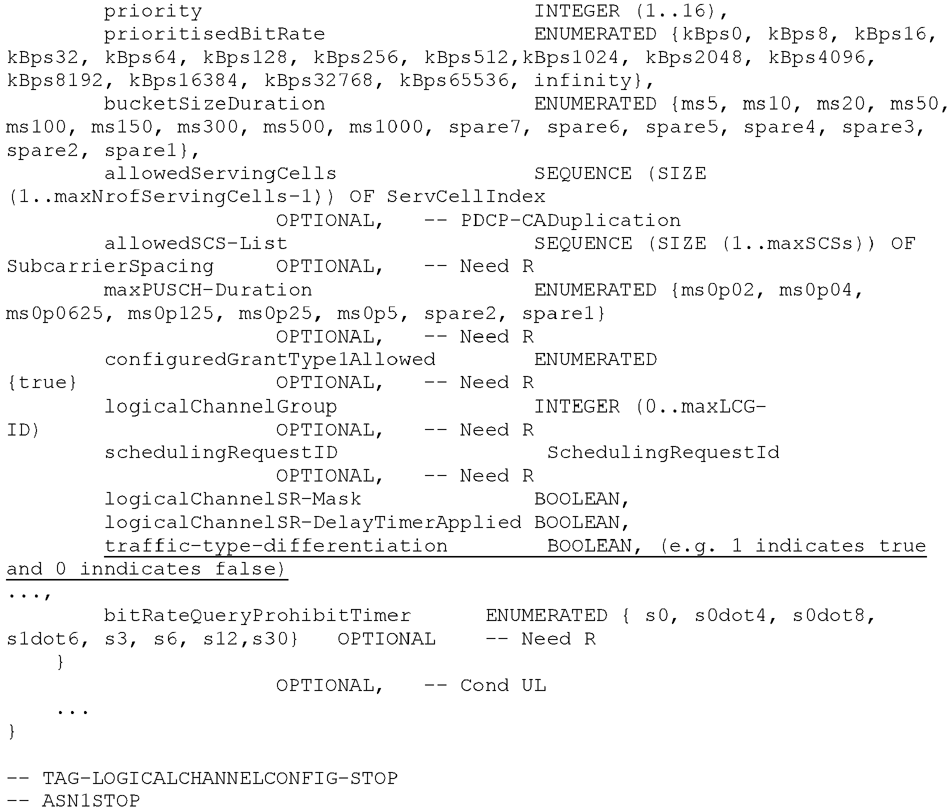

For example, when a UE sends the BSR, it indicates the total data volume along with a traffic type which belongs either to eMBB or eURLLC (in general, to a first traffic type and to a second traffic type, respectively). For example, two bit can be used for this purpose: "00" may indicate eURLLC, while "01" indicates eMBB. The value "10" may indicates both kinds of traffic within the logical channel group. Another example is that first four bits indicate data that belongs to eMBB and remaining 4 bits indicate data that belongs to eURLLC. This example is somewhat similar to the example described with reference to Fig. 14. In other words, the uplink control information includes a first field indicating amount of data available for transmission at the UE for the eMBB traffic type and a second field indicating amount of data available for transmission at the UE for the eURLLC traffic type. The UCI may be a short BSR of 8 bits consisting of four bits of the first field and four other bits of the second field. However, the present disclosure is not limited to such format of the UCI. Rather, the UCI may include further fields. For example, the UCI may include a third field which indicates a priority. In an exemplary implementation, the priority field may be capable of taking at least two of the following values: (i) indicating low priority for both the first traffic type and a the second traffic type; (ii) indicating high priority for both the first traffic type and the second traffic type, (iii) indicating low priority for the first traffic type and high priority for the second traffic type, and (iv) indicating high priority for the first traffic type and low priority for the second traffic type.

In other words, the distinction between the eMBB and eURLLC traffic may be indicates in the same way as described above for the distinction between the data with HARQ enabled and data with HARQ disabled. Thus, instead (or in addition to) providing in the UCI the indication of the mixed data including both the data with enabled HARQ and data with disabled HARQ, the UCI may include indication of a mixed data including both a first type of traffic and a second type of traffic. Here, the first type of traffic is eMBB and the second type of traffic is eURLLC. However, the present disclosure is not limited to these traffic types. The first type of traffic may be traffic with delay requirements stricter than the delay requirements of the second type of traffic or vice versa. There may be also more than two different kinds of traffic differing from each other, e.g., by different QoS requirements. In general, the data with acknowledgements enabled may be also seen as a first type of traffic and the data with acknowledgements disabled may be seen as a second type of traffic. Thus, the present disclosure as described above may be generally applied to any plural types of traffic correspondingly.

For example, the following Table 6 illustrates an exemplary UCI format in which a first field of three bits indicates latency requirement and reliability. It is noted that in general, the present disclosure is not limited to both the higher reliability and low latency requirement. There may be embodiments in which only one of them is signaled, or in which both are signaled mutually independently.

For example, the value "000" indicates that 100% of the total data volume (indicated in a third field) has high latency requirement, i.e. low latency, and high reliability requirement. It is noted that this may correspond to the data with HARQ disabled in some embodiments, whereas the traffic with low latency requirements may correspond to the HARQ enabled data. The value "001" indicates, in this example, that 90% of the total data volume (indicated in a third field) has high latency/reliability requirement, whereas 10% of the total data has a low latency/reliability requirement (e.g. meets the QoS even with latencies higher than the traffic with high latency/reliability requirement). Further lines of the table corresponding to the 3 bits of the first field have the corresponding meaning, indicating different ratios between the traffic with high latency/reliability requirements and low latency/reliability requirements.

**Table 6: Exemplary short BSR format including HARQ or priority indication, traffic type, and total data volume.**

| **3 bits** | **Latency requirement and Reliability** | **Traffic types (2 bits)** | **Total Data volume (3 bits)** |
|---|---|---|---|
| 000 | 100% High | 00- eURLLC | Total Data volume (3 bits) |
| 001 | 90% High 10% Low | 01- eMBB | Total Data volume (3 bits) |
| 010 | 70% High 20% Low | 10- both | Total Data volume (3 bits) |
| 011 | 50% High 30% Low | | Total Data volume (3 bits) |
| 100 | 30% High 50% Low | | Total Data volume (3 bits) |
| 101 | 20% High 70% Low | | Total Data volume (3 bits) |
| 110 | 10% High 90% Low | | Total Data volume (3 bits) |
| 111 | 100% Low | | Total Data volume (3 bits) |

A second field has a length of two bits and indicates whether the total volume of data (indicated in the third field) includes eURLLC ("00" value), eMBB ("01" value), or both ("11" value). Moreover, the third field indicates the total amount of data available for the transmission at the UE.

Another example is shown in Table 7, in which three bits (first field) indicate traffic type share and five bits (second field) indicate total data volume for all traffic types. In other words, the three bits enable signaling of eight different traffic share ratios. For example, one value (here "000") indicates that the total data volume includes 100% of eMBB traffic. Another value (here "011") may indicate a particular share of eMBB and eURLLC among the total data volume (such as 50% eMBB and 50% eURLLC). A further value (here "111") may indicate 100% of eURLLC traffic. The second field (here with the exemplary 5 bits) indicates the total amount of data available for transmission at the terminal.

**Table 7: Exemplary short BSR format traffic type share and total data volume.**

| **3 bits** | **Traffic** | **Total Data volume (5 bits)** |
|---|---|---|
| 000 | 100% eMBB | Total Data volume (3 bits) |
| 001 | 90% eMBB 10% eURLLC | Total Data volume (3 bits) |
| 010 | 70% eMBB 30% eURLLC | Total Data volume (3 bits) |
| 011 | 50% eMBB 50% eURLLC | Total Data volume (3 bits) |
| 100 | 30% eMBB 70% eURLLC | Total Data volume (3 bits) |
| 101 | 20% eMBB 80% eURLLC | Total Data volume (3 bits) |
| 110 | 10% eMBB 90% eURLLC | Total Data volume (3 bits) |
| 111 | 100% eURLLC | Total Data volume (3 bits) |

A further example is shown in Table 8. In Table 8, a first field indicates, similarly to the first field of Table 7, traffic share between the eMBB traffic and the eURLLC traffic (or, in general, share between a first type of traffic and a second type of traffic). It is noted that in general, there may be more than two types of traffic defined and, correspondingly, shares between more than two types of traffic indicated within an uplink control information. A second field indicates total data volume, i.e. amount of data available to be transmitted at the UE. Here, the second field has a length of three bits rather than 5 bits mentioned above regarding Table 7. However, in general, the present disclosure is not limited to any particular number of bits. While it may be an advantage to keep UCI having 8 bits - e.g. for application in the NR context, in general, a smaller or a larger amount of bits may be used. Table 8 also shows a third field indicating priority of the respective traffic types. There is a distinction of high and low priority. As there are two possible traffic types in this example, the priority is indicated by two bits. In general, more levels of priority and/or more traffic types may be used. As can be seen here, one level (here "00") indicates that both first and second traffic type have high priority. Another level (here "01") indicates that a first type of traffic (eMBB) has a high priority whereas the second type of traffic has a low (eURLLC) priority. Another level (here "10") indicates that the second type of traffic (eMBB) has a high priority whereas the first type of traffic has a low (eURLLC) priority. Finally, another level (here "11") indicates that both the fist and the second level have low priority. High and low here mean "high" and "low" among these two possible states, i.e. the "high" means higher than "low".

**Table 8: Exemplary short BSR format including HARQ or priority indication, traffic type, and total data volume.**

| **3 bits** | **Traffic** | **Priority (2 bits)** | **Total Data volume (3 bits)** |
|---|---|---|---|
| 000 | 100% eMBB | 00-Both have higher Priority | Total Data volume (3 bits) |
| 001 | 90% eMBB 10% eURLLC | 01- eMBB higher priority and eURLLC lower priority | Total Data volume (3 bits) |
| 010 | 70% eMBB 20% eURLLC | 10- eMBB lower priority and eURLLC higher priority | Total Data volume (3 bits) |
| 011 | 50% eMBB 30% eURLLC | 11-both have lower priority | Total Data volume (3 bits) |
| 100 | 30% eMBB 50% eURLLC | | Total Data volume (3 bits) |
| 101 | 20% eMBB 70% eURLLC | | Total Data volume (3 bits) |
| 110 | 10% eMBB 90% eURLLC | | Total Data volume (3 bits) |
| 111 | 100% eURLLC | | Total Data volume (3 bits) |

Following transmission of the UCI, the (transceiver of the) UE, in operation, receives at least one grant for said data available for transmission at the UE. As mentioned above, the scheduling entity may send one common grant for both types of traffic or may send one grant with separate fields for the first type of traffic and for the second type of traffic.

Alternatively, said at least one grant includes a first grant for the data for which acknowledgements are enabled and a second grant for the data for which acknowledgements are disabled, wherein the first grant and the second grant are conveyed by separate downlink control information messages. In other words, there is a plurality of different grants for the respective plurality of traffic types.

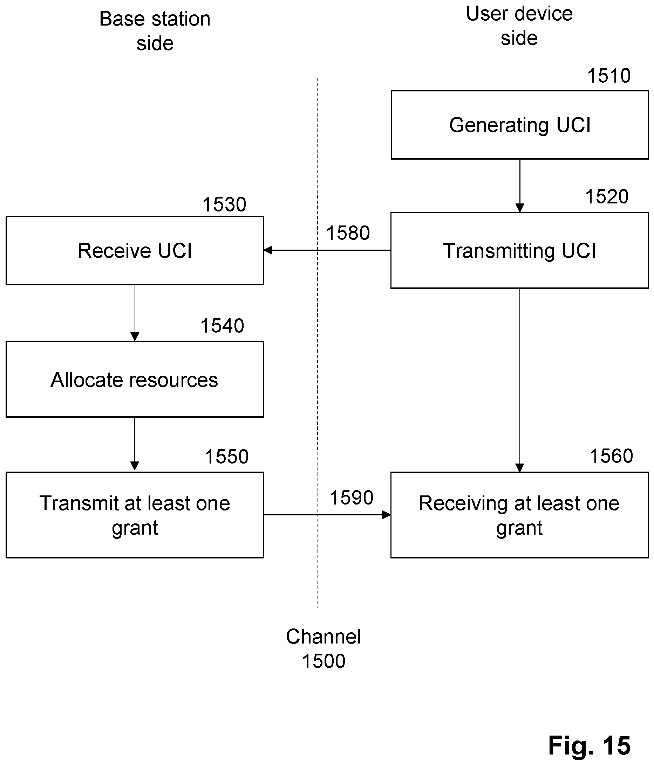

Fig. 15 is a combined flow chart and message chart illustrating a method performed at the base station a method performed at the user device and a communication between the base station and the mobile device.

On the right hand side, a communication method is illustrated. The method comprises the following steps to be performed by a user equipment, UE (i.e. at the user device side): generating 1510 uplink control information 1580, and transmitting 1520 the generated uplink control information 1580. As mentioned above, the uplink control information 1580 indicates: data available for transmission at the UE and indicates that (whether) said data available for transmission include both data for which acknowledgements are enabled and data for which acknowledgements are disabled.

The step 1510 of generating the UCI 1580 may be preceded by determining the amount of the data available for the transmission. These may be the data available for transmission over a logical channel group including one or more logical channels. The determination may be performed by acquiring the amount of data in the transmission buffer.

The generating step 1510 may include, in particular, generating a signaling message in which the UCI is indicated. This may be, for instance, a MAC message such as buffer status report message, and in particular the short buffer status report which can have 8 bits of length. The generating step, the message is generated based on syntax of the message (defining which fields and in which order are arranged in the message). The syntax may be defined by a standard or any convention which is understood at both user device and at the network side (e.g. at the base station).

The transmitting step 1520 may include transmission processing such as performing coding and/or modulation, shaping the signal, and/or adjusting the power, and transmitting it from one or more antennas of the user device.

The method may further include reception 1560 of grant 1590. The reception 1560 of grant 1590 may include demodulating and/or decoding the grant and extracting the information conveyed by the grant. For example, the grant includes identification of resources, which may be used by the UE to transmit the data available for the transmission. Moreover, the grant may include an indication of the LCG for which the grant is issued and/or further settings such as modulation and coding scheme to be applied or other transmission parameters.

On the left hand side of Fig. 15, a communication method to be performed by a base station is illustrated. This method comprises the steps of receiving 1530 uplink control information 1580, providing 1540 at least one grant for said data available for transmission at the UE according to the uplink control information; and transmitting 1550 the at least one provided grant 1590 to the UE from which it received the uplink control information. Similarly as mentioned above, the UCI 1580 indicates: data available for transmission at a user equipment, UE, and that said data available for transmission include both data for which acknowledgements are enabled and data for which acknowledgements are disabled.

Providing of the grant here may be performed by resource allocation and scheduling. Moreover, for the format of the uplink control information, any of the embodiments described in this disclosure applies.

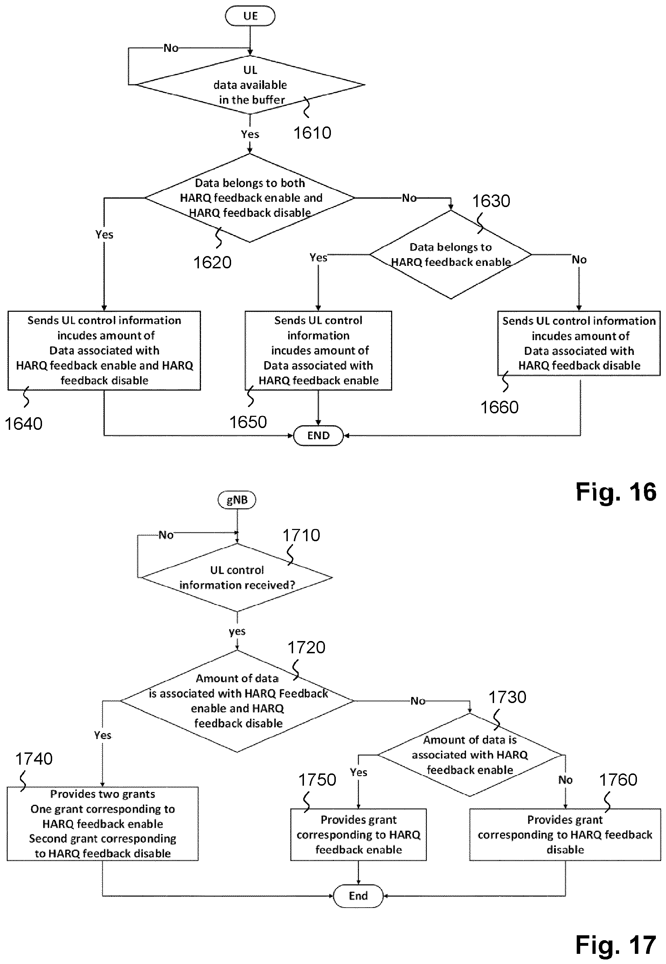

Fig. 16 shows a more detailed flow chart, which illustrates a method that may be performed on a user device side. In step 1610, the UE determines that there are data available for transmission (e.g. in uplink), i.e. that there are data in the UE's transmission buffer. If there is no data for transmission (no in step 1610), the UE continues checking whether there are data for transmission. If there is data for transmission at the UE (yes in step 1610), the UE determines 1620 the type of data regarding acknowledgement enabling/disabling. For example, in step 1620, the UE determines whether or not the data for transmission include mixed data with enabled and disabled acknowledgements. The data (available) for transmission here are data for which a single buffer status is provided to the network. For example, in the context of the NR system, this may be data pertaining to logical channels of the same logical channel group. However, the present disclosure is not limited to such transmission organization (by means of logical channels and groups of logical channels). If there are mixed data (i.e. data a part of which has acknowledgements enabled while the remaining part has acknowledgements disabled) in step 1620, then the method proceeds with step 1640. If there are no mixed data, the method proceeds with step 1630.

In step 1640 the UE provides an uplink control information indicating the amount of the mixed data. As described above, in some embodiments, the UE provides an indication that the data is mixed. In some exemplary implementations, this is implemented in that the UE indicates proportion (share) of the data with HARQ enabled (which implicitly also indicates proportion of data with HARQ disabled) or HARQ disabled (which implicitly also indicates proportion of data with HARQ disabled). Alternatively, the UE may provide an indication of the amount of data for each part (HARQ enabled, HARQ disabled) of the mixed data. Such signaling effectively also indicates share of data with / without HARQ enabled among the total data available for transmission.

In step 1630, the UE proceeds with determining whether the entire data available for transmission have acknowledgements enabled or disabled. If the data available for transmission has the acknowledgements enabled, in step 1650 the UE provides uplink control information with indication of the total amount of the data. In addition, the UE may provide also an indication indicating that the data has acknowledgements enabled. Such indication, however, may not be necessary if the network can obtain it in a different way. For example, in case the network has configured logical channels and groups for the UE and the HARQ enablement/disablement is set per logical channel, the network knows that in certain logical channel group there are only logical channels with HARQ enabled or only logical channels with HARQ disabled. In such cases no additional indication is necessary in the uplink control information and the total amount of data available for transmission is sufficient to be indicated.

If on the other hand, the data available for transmission has the acknowledgements disabled, in step 1660, the UE provides uplink control information with indication of the total amount of the data. This is similar as the step 1650.

Thus, in steps 1650 and 1660 a normal BSR may be sent, such as the short BSR known from the NR system. In case of step 1640, additional information is provided. The present disclosure is not limited to the BSRs as known from the NR system. Rather, as mentioned above, the uplink control information may be sent in any other way in the uplink. In general, the uplink control information may be sent with or separated from a scheduling request on physical layer, with a buffer status or another message on MAC layer, or in another layer. While the description above focused on uplink scheduling performed by the network and in particular a base station, it is noted that the present disclosure is not limited thereby and that the uplink control information may also be provided for data available for transmission via sidelink. The sidelink scheduling may be coordinated by the base station / network as mentioned above or may be at least partially performed by another user device.

Fig. 17 is a flow chart exemplifying a method performed by a scheduling entity. The scheduling entity may be a base station, another network entity, or even another communication (user) device. In step 1710, the gNB (in this particular example) determines whether the uplink control information has been received from a UE. If affirmative (yes in step 1710), the method proceeds to step 1720. Otherwise (no in step 1710), the determination is performed repeatedly. In step 1720, when the uplink control information is received, the gNB determines whether the amount of data indicated in the uplink control information is associated with both data having HARQ enabled and data having HARQ disabled. If the amount of data indicated in the uplink control information is associated with both (yes in step 1720), the method proceeds to step 1740 in which the gNB provides two grants, one grant for the data with HARQ enabled and one grant for the data with HARQ disabled. In case of the NR, a grant may be transmitted within downlink control information (DCI) which may be provided on a physical downlink control channel (PDCCH). Thus, the two grants provided in step 1740 may be provided within two separate DCI messages. This may facilitate maintaining a short DCI format.

Two separate grants may provide advantages, in particular for a case in which different priority is indicated for the data with enabled HARQ and with disabled HARQ. For instance, a grant for the more prioritized data may be issued faster than the grant for less prioritized data. However, the present application is not limited to providing two separate grants. In general, a common grant may be provided, or two grants within a single message may be provided in some implementations.

If the amount of data indicated in the uplink control information is not associated with both kinds of data (no in step 1720), the method proceeds to step 1730. In step 1730, the gNB determines whether the amount of data indicated in the uplink control information has acknowledgements enabled or disabled. If the data has acknowledgements enabled (yes in step 1730), in step 1750, a grant is issued for such data. If the data has acknowledgements disabled (no in step 1730), in step 1760, a grant is issued for such data.

In other words, in Figures 16 and 17, an UCI generally indicates the amount of data available for transmission from the terminal (scheduled entity) to the base station (scheduling entity). The amount may be indicated either for mixed data (including both data with HARQ enabled and data with HARQ disabled) or for data with either HARQ enabled or HARQ disabled. When the amount is for the mixed data, as described above, it is beneficial, if an indication is provided regarding the share of the data with and without HARQ enabling.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

According to a first embodiment, a communication device (apparatus) is provided which comprises circuitry, which, in operation, generates uplink control information indicating: data available for transmission at the communication device which is a user equipment, UE, and that said data available for transmission include both data for which acknowledgements are enabled and data for which acknowledgements are disabled. The communication device further comprises a transceiver, which, in operation, transmits the generated uplink control information.
According to a second embodiment, a communication device (apparatus) is provided, which comprises a transceiver, which, in operation, receives uplink control information indicating: data available for transmission at a user equipment, UE, and that said data available for transmission include both data forwhich acknowledgements are enabled and data forwhich acknowledgements are disabled; circuitry, which, in operation, provides at least one grant for said data available for transmission at the UE according to the uplink control information; wherein the transceiver, in operation, transmits the at least one provided grant.

According to a third embodiment, the communication device according to any of the first or the second embodiment is provided, wherein the uplink control information specifies: a share of the data for which acknowledgements are enabled and/or the data for which acknowledgements are disabled in the data available for transmission; and a total amount of the data available for transmission.

According to a fourth embodiment, the communication device according to any of the first to the third embodiment is provided, wherein uplink control information includes: a first amount of the data for which acknowledgements are enabled, and a second amount of the data for which acknowledgements are disabled.

According to a fifth embodiment, the communication device according to any of the first to the fourth embodiment is provided, wherein the uplink control information further includes a first priority of the data for which acknowledgements are enabled and/or a second priority of the data for which acknowledgements are disabled in the data available for transmission, wherein the first priority is different from the second priority.

According to a sixth embodiment, the communication device according to any of the first to the fifth embodiment is provided, wherein: the uplink control information includes an uplink control information index, and the uplink control information index is associated with a combination of an amount of the data available for transmission and an acknowledgement enablement status, the acknowledgement enablement status is capable of indicating at least one of: whether acknowledgements are enabled or disabled for the data available for transmission; and whether or not said data available for transmission include both data for which acknowledgements are enabled and data for which acknowledgements are disabled.

According to a seventh embodiment, the communication device according to any of the first to the sixth embodiment is provided, wherein the data available for transmission are data available for all logical channels of a logical channel group; and each logical channel of the logical channel group is configurable to carry any one of: data for which acknowledgements are enabled, data for which acknowledgements are disabled, and data for which acknowledgements are enabled and data for which acknowledgements are disabled.

According to an eighth embodiment, the communication device according to any of the first to the seventh embodiment is provided, wherein the uplink control information is a buffer status report on Medium Access Control, MAC, layer, indicating amount of the data available for transmission at the UE.

According to a ninth embodiment, the communication device according to any of the first to the eighth embodiment is provided, wherein the buffer status report is a short buffer status report with a size of 8 bits that includes: 3 bits for signaling whether said data available for transmission include both data forwhich acknowledgements are enabled and data forwhich acknowledgements are disabled, and 5 bits for signaling the amount of the data available for transmission by the UE; or 3 bits for signaling whether said data available for transmission include both data for which acknowledgements are enabled and data for which acknowledgements are disabled; 3 bits for signaling the amount of the data available for transmission by the UE, and 2 bits for signaling the priority of the data available for transmission; or 4 bits for the amount of the data for which acknowledgements are enabled, and 4 bits for the amount of the data for which acknowledgements are disabled.

According to a tenth embodiment, the communication device according to any of the first to the sixth embodiment is provided, wherein the uplink control information is a scheduling request on physical layer.

According to an eleventh embodiment, the communication device according to any of the first to the tenth embodiment is provided, wherein the uplink control information includes a traffic type indication capable of indicating at least one of enhanced Ultra Reliable and Low Latency Communications, eURLLC, and Enhanced Mobile Broadband, eMBB.

According to a twelfth embodiment, the communication device according to the first embodiment is provided, wherein the transceiver, in operation, receives at least one grant for said data available for transmission at the UE.

According to a thirteenth embodiment, the communication device according to the second or twelfth embodiment is provided, wherein said at least one grant includes a first grant for the data for which acknowledgements are enabled and a second grant for the data for which acknowledgements are disabled, and the first grant and the second grant are conveyed by separate downlink control information messages.

According to a fourteenth embodiment, a communication method is provided, comprising the following steps to be performed by a user equipment, UE: generating uplink control information that indicates: data available for transmission at the UE, and that said data available for transmission include both data for which acknowledgements are enabled and data for which acknowledgements are disabled; and transmitting the generated uplink control information.

According to a fifteenth embodiment, a communication method is provided, comprising the following steps to be performed by a base station: receiving uplink control information that indicates: data available for transmission at a user equipment, UE, and that said data available for transmission include both data for which acknowledgements are enabled and data for which acknowledgements are disabled; providing at least one grant for said data available for transmission at the UE according to the uplink control information; and transmitting the at least one provided grant.

According to a sixteenth embodiment, a computer program is provided, which is stored on a non-transitory medium and including program code instructions which when executed on processing circuitry (such as one or more processors) execute all steps of the method according to any of the fourteenth or fifteenth embodiment.

According to a seventeenth embodiment, an integrated circuit is provided which embeds the circuitry according to any of the preceding embodiments (first to thirteenth embodiment).

According to an eighteenth embodiment, a circuitry (integrated or distributed) is provided which is configured to perform steps of any of methods mentioned above.

## Claims

1. A communication device, comprising:
circuitry, which, in operation, generates uplink control information indicating:
- data available for transmission at the communication device which is a user equipment, UE, and
- that said data available for transmission include both data for which acknowledgements are enabled and data for which acknowledgements are disabled; and
a transceiver, which, in operation, transmits the generated uplink control information.

2. A communication device, comprising:
a transceiver, which, in operation, receives uplink control information indicating:
- data available for transmission at a user equipment, UE, and
- that said data available for transmission include both data for which acknowledgements are enabled and data for which acknowledgements are disabled;
circuitry, which, in operation, provides at least one grant for said data available for transmission at the UE according to the uplink control information;
wherein the transceiver, in operation, transmits the at least one provided grant.

3. The communication device according to any of claims 1 or 2, wherein uplink control information specifies:
a share of the data for which acknowledgements are enabled and/or the data for which acknowledgements are disabled in the data available for transmission; and
a total amount of the data available for transmission.

4. The communication device according to any of claims 1 or 2, wherein uplink control information includes:
a first amount of the data for which acknowledgements are enabled, and
a second amount of the data for which acknowledgements are disabled.

5. The communication device according to any of claims 1 to 4, wherein the uplink control information further includes a first priority of the data for which acknowledgements are enabled and/or a second priority of the data for which acknowledgements are disabled in the data available for transmission, wherein the first priority is different from the second priority.

6. The communication device according to any of claims 1 to 5, wherein:
the uplink control information includes an uplink control information index, and
the uplink control information index is associated with a combination of an amount of the data available for transmission and an acknowledgement enablement status,
the acknowledgement enablement status is capable of indicating at least one of:
- whether acknowledgements are enabled or disabled for the data available for transmission; and
- whether or not said data available for transmission include both data for which acknowledgements are enabled and data for which acknowledgements are disabled.

7. The communication device according to any of claims 1 to 6, wherein
the data available for transmission are data available for all logical channels of a logical channel group; and
each logical channel of the logical channel group is configurable to carry any one of:
- data for which acknowledgements are enabled,
- data for which acknowledgements are disabled, and
- data for which acknowledgements are enabled and data for which acknowledgements are disabled.

8. The communication device according to any of claims 1 to 7, wherein
the uplink control information is a buffer status report on Medium Access Control, MAC, layer, indicating amount of the data available for transmission at the UE.

9. The communication device according to any of claims 1 to 8, wherein the buffer status report is a short buffer status report with a size of 8 bits that includes:
- 3 bits for signaling whether said data available for transmission include both data for which acknowledgements are enabled and data for which acknowledgements are disabled, and 5 bits for signaling the amount of the data available for transmission by the UE; or
- 3 bits for signaling whether said data available for transmission include both data for which acknowledgements are enabled and data for which acknowledgements are disabled; 3 bits for signaling the amount of the data available for transmission by the UE, and 2 bits for signaling the priority of the data available for transmission; or
- 4 bits for the amount of the data for which acknowledgements are enabled, and 4 bits for the amount of the data for which acknowledgements are disabled.

10. The communication device according to any of claims 1 to 6, wherein the uplink control information is a scheduling request on physical layer.

11. The communication device according to any of claims 1 to 10, wherein the uplink control information includes a traffic type indication capable of indicating at least one of enhanced Ultra Reliable and Low Latency Communications, eURLLC, and Enhanced Mobile Broadband, eMBB.

12. The communication device according to claim 1, wherein the transceiver, in operation, receives at least one grant for said data available for transmission at the UE.

13. The communication device according to claim 12 or 2, wherein
said at least one grant includes a first grant for the data for which acknowledgements are enabled and a second grant for the data for which acknowledgements are disabled,
the first grant and the second grant are conveyed by separate downlink control information messages.

14. Communication method, comprising the following steps to be performed by a user equipment, UE:
generating uplink control information that indicates:
- data available for transmission at the UE, and
- that said data available for transmission include both data for which acknowledgements are enabled and data for which acknowledgements are disabled; and
transmitting the generated uplink control information.

15. Communication method, comprising the following steps to be performed by a base station:
receiving uplink control information that indicates:
- data available for transmission at a user equipment, UE, and
- that said data available for transmission include both data for which acknowledgements are enabled and data for which acknowledgements are disabled;
providing at least one grant for said data available for transmission at the UE according to the uplink control information; and
transmitting the at least one provided grant.
